# EUROPEAN PATENT APPLICATION

(11) **EP 2 157 553 A1**
(43) Date of publication of application: **24.02.2010**
(21) Application number: 08765367.1
(22) Date of filing: 10.06.2008
(51) Int. Cl.: G07D 9/00, G06Q 40/00

(54) **MONEY PROCESSOR, MONEY PROCESSOR SYSTEM, AND CONTROL METHOD**

(30) Priority: 14.06.2007 JP 2007157140
(71) Applicant: Glory Ltd., Himeji-shi Hyogo 670-8567 (JP)
(72) Inventor: OE, Takahiro, Himeji-Shi Hyogo 670-8567 (JP); FUJITA, Yoshitada, Himeji-Shi Hyogo 670-8567 (JP)
(74) Representative: Schwabe - Sandmair - Marx
(86) International application number: PCT/JP2008/060577
(87) International publication number: WO 2008/153010

(57) **Abstract**

A money handling machine of the present invention is provided with: a communication interface that can be connected to a communication network; and a web server portion that generates instruction data for providing an instruction to control the money handling machine, through a terminal device connected to the communication network, and that uses the communication interface to transmit the instruction data. The instruction data is in a form that can be browsed by a web browser included in the terminal device, and the web server portion receives a browsing requirement from the web browser and transmits the instruction data to the web browser, which made the requirement. The web server portion transmits the instruction data with a HTTP protocol or a HTTPS protocol.

## Description

### Technical Field

The present invention relates to a money handling machine that is installed in a financial institution or the like where it is used, and more particularly to a money handling machine that can be controlled from a plurality of terminal devices connected to a communication network.

### Background Art

In recent years, various money handling devices have been introduced into windows or the like of financial institutions and transportation facilities. Specifically, for example, in financial institutions such as banks, there are money depositing and dispensing machines that deposit and dispense money received from customers. Such a money depositing and dispensing machine is generally placed so as to be sandwiched between two clerks (hereinafter, referred to as "tellers"), and banknotes and coins can be deposited and dispensed from both sides of the machine.

Conventionally, in the money handling machines described above, as terminal devices for controlling them, machines dedicated to manufacturers are used. However, since a special driver and a unique communication protocol are used for the dedicated machine, it is disadvantageously time-consuming to configure a system and perform maintenance. Moreover, when the specifications of the money handling machine are modified, it is necessary to modify the function of the terminal device according to the modified specifications.

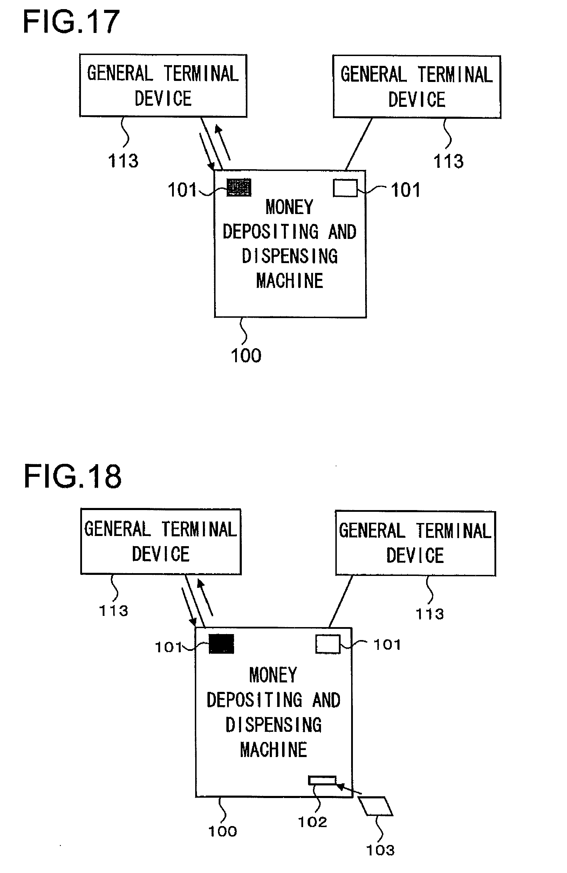

As shown in Fig. 17, a conventional money depositing and dispensing machine 100 (= a money handling machine) is provided with an occupation button 101 that indicates which general terminal device 113 (= a terminal device) instructs the machine to, for example, deposit and dispense money and thereby occupies the machine. However, since there is a limitation on the number of exclusion control components, such as the occupation button 101, that can be physically arranged, it is disadvantageously difficult to connect a large number of general terminal devices 113 to the money depositing and dispensing machine 100.

In the conventional money depositing and dispensing machine 100, when a dispensing outlet is closed because dispensed money is left behind or any other problem occurs, the closing cannot be cancelled without permission of a supervisor (= a manager). By contrast, for example, there is provided a money depositing and dispensing machine 100 in which, as shown in Fig. 18, an ID card 103 used by a teller when money is dispensed is authenticated again by an ID card reader 102, and in which thus it is possible to cancel the closing to remove the money. However, it is necessary for the money depositing and dispensing machine 100 to additionally include a readout device such as the ID card reader 102, and this increases the cost. Disadvantageously, it is time-consuming for the teller to re-authenticate the ID card 103.

In connection with the foregoing, in patent document 1, there is disclosed a terminal processing system in which any number of terminal devices can be connected through a communication line to a money handling machine, and in which the money handling machine determines, according to its own condition, whether or not to receive occupation requests from the terminal devices. With this terminal processing system, it is possible to perform processing corresponding to requests from a plurality of terminal devices without any problem. Thus, when the system is installed in a window where a money handling machine is almost unnecessary, any number of terminal devices can be combined with one money handling machine.

In connection with the foregoing, in patent document 2, there is disclosed a money handling machine that is connected to the terminal of a supervisor, that transmits an approval request to the terminal of the supervisor at the time of a transaction requiring an approval of the supervisor, that receives, from the terminal of the supervisor, information indicating the approval and that thereby handles cash. This eliminates not only the need for a teller to look for the supervisor but also the need for the supervisor to come to the money handling machine; thus, this not only reduces burdens on both the supervisor and the teller but also decreases processing time.
Patent document 1: JP-A-2000-339522
Patent document 2: JP-A-2003-303286

### Disclosure of the Invention

### Problems to be Solved by the Invention

However, although the money handling machines in patent documents 1 and 2 allow the connection of a plurality of terminal devices and reduce the time required to receive an approval to remove money that is left behind, dedicated machines are used as terminal devices as in the conventional money handling machines. Thus, when, in the money handling machine, specifications affecting the user interface of the terminal device are modified, for example, when a function selectable from a menu screen is added or other modifications are performed, it is necessary to modify software installed in the terminal device. This disadvantageously increases the amount of work required to modify specifications.

In view of the foregoing problems, it is an object of the present invention to provide a money handling machine with which it is possible to freely determine the number of terminal devices that can control the money handling machine, and with which, when the specifications of a money handling machine system are modified, it is possible to easily modify the system by modifying only the money handling machine. It is also an object of the invention to provide a money handling machine system incorporating such a money handling machine.

### Means for Solving the Problem

To achieve the above object, according to one aspect of the present invention, there is provided a money handling machine for handling money including: a communication interface that can be connected to a communication network; and a web server portion that generates instruction data for providing an instruction to control the money handling machine, through a terminal device connected to the communication network, and that uses the communication interface to transmit the instruction data.

In the money handling machine, the instruction data may be in a form that can be browsed by a web browser included in the terminal device, and the web server portion may receive a browsing requirement from the web browser and transmit the instruction data to the web browser, which made the requirement.

Here, the web server portion may transmit the instruction data with a HTTP (hypertext transfer protocol) protocol or a HTTPS (hypertext transfer protocol security) protocol obtained by adding a data encryption function to the HTTP protocol.

The web server portion may also have a money transaction processing function of transmitting the instruction data on a money transaction and performing money transaction processing based on a response to the instruction data.

Here, the money transaction processing function may include at least one of a depositing processing function of depositing money, a dispensing processing function of dispensing money, a replenishing processing function of replenishing the money dispensed by the dispensing processing function and a collection processing function of collecting money within the money handling machine.

The web server portion may also have an information display processing function of obtaining and transmitting, to the terminal device, at least one of money balance information indicating a money balance within the money handling machine, transaction history information indicating a history of a money transaction and setting information necessary to operate the money handling machine, among various types of information stored in the money handling machine.

The money handling machine may also include a storage portion that stores specific information for each terminal device.

Here, the specific information may include terminal recognition information assigned to each terminal device such that the terminal device is recognized.

The specific information may also include terminal user information that allows the user of the terminal device to be identified.

The specific information may also include an IP address assigned to the terminal device.

The specific information may also include a MAC address unique to the terminal device.

The specific information may also be divided into: general user information indicating a terminal device used by a general user that can use only a predetermined part of functions included in the money handling machine; and supervisor information indicating a terminal device used by a supervisor that can use all the functions included in the money handling machine.

The money handling machine may also include a control portion that requires, when an instruction to dispense money is given to the money handling machine through the terminal device, a password to be input through an operation portion included in the money handling machine, that compares the password stored in the storage portion with the password input through the operation portion and that allows, when both the passwords agree with each other, the dispensed money to be removed from the money handling machine. Here, the storage portion stores a password corresponding to the specific information.

The money handling machine may also include a control portion. Here, when an instruction to dispense money is given to the money handling machine through the terminal device, and the money dispensed based on the instruction to dispense money has not been removed from the money handling machine for a predetermined period of time and thus a dispensing outlet is closed, the control portion performs control such that the dispensed money can be removed by an instruction through a terminal device in which stored specific information is the supervisor information.

The money handling machine may also include a control portion that provides, when receiving an instruction requiring a supervisor approval through a terminal device in which stored specific information is the general user information, a notification to require the supervisor approval through a terminal device in which stored specific information is the supervisor information, and that performs, when the requirement is approved, processing corresponding to the instruction.

The money handling machine may also include a control portion that compares first registration information received from the terminal device though the communication network with second registration information that has been input to the money handling machine within a predetermined period of time since the reception of the registration information, and that allows, when the first registration information agrees with the second registration information, the terminal device to utilize all functions included in the web server portion.

The money handling machine may also include: an operation portion through which a selection and a setting on various types of money transaction processing are performed; a display portion that displays various processing conditions and various types of setting inforamation; a web client portion that can utilize, by browsing data provided by the web server portion, various functions included in the web server portion; and a control portion that controls display processing for displaying, on the display portion, the money transaction processing, processing related to an operation performed by the operation portion and a result obtained by browsing of the web client portion.

Here, the operation portion and the display portion may be each formed with a touch-panel display.

According to another aspect of the present invention, there is provided a money handling machine system that includes a money handling machine for handling money and a terminal device communicating with the money handling machine through a communication network, in which the money handling machine is any one of the above-described money handling machines.

According to another aspect of the present invention, there is provided a method of controlling a money handling machine for handling money, the method including: a first step of generating instruction data for providing an instruction to control the money handling machine, through a terminal device connected to the communication network; and a second step of receiving a browsing requirement from a web browser included in the terminal device and transmitting the instruction data to the web browser, which made the requirement. Here, the instruction data is in a form that can be browsed by the web browser.

In the control method, the instruction data can provide an instruction to perform a money transaction processing function included in the money transaction processing machine, and the money transaction processing function may include at least one of a depositing processing function of depositing money, a dispensing processing function of dispensing money, a replenishing processing function of replenishing the money dispensed by the dispensing processing function and a collection processing function of collecting money within the money handling machine.

The control method may include a third step of receiving the browsing requirement from the web browser included in the terminal device and obtaining and transmitting, to the terminal device for the web browser that made the requirement, at least one of money balance information indicating a money balance within the money handling machine, transaction history information indicating a history of a money transaction and setting information necessary to operate the money handling machine.

The control method of claim 20 may include a fourth step of comparing first registration information received from the terminal device though the communication network with second registration information that has been input to the money handling machine within a predetermined period of time since the reception of the registration information, and of allowing, when the first registration information agrees with the second registration information, the terminal device to utilize all functions included in the web server portion.

### Advantages of the Invention

According to one aspect of the present invention, it is possible to control a money handling machine from a general web browser application (hereinafter referred to as a "browser") installed in a terminal device. Thus, unlike a conventional money handling machine system, when the specifications of the system are modified, it is unnecessary to modify the terminal device, for example, to install a driver and to add an application. This makes it possible to easily modify specifications and thus reduce cost and burdens on a system builder.

Since the terminal device is connected to the money handling machine through a LAN (local area network) or the like using the commonly used IEEE802.3 standard, it is possible to easily configure a system by utilizing a convention communication environment. Since, theoretically, the number of terminal devices that can be connected to the money handling machine is not limited, it is possible to employ a method of using one money handling machine and a plurality of terminal devices.

Since the communication with the terminal device is performed according to the HTTP protocol or the HTTPS protocol, it is possible to form the web server portion with, for example, open-source software without the need for a specific type of vender software. Thus, it is possible not only to reduce cost for system configuration but also to facilitate maintenance.

When processing requiring the approval of a supervisor is required, it is possible for the supervisor to provide the approval by using a browser installed in the terminal device of the supervisor. Moreover, it is possible to reference, from the browser, information on the history of approvals performed in the past. Thus, it is unnecessary for the supervisor to come to the money handling machine in order to provide approval or check the history of approvals, with the result that it is possible to reduce burdens of operations on the supervisor. Furthermore, since, unlike an approval through the use of an ID card, it is unnecessary to additionally provide a component such as a card reader, it is possible to reduce an increase in cost.

When money is dispensed, a user that provides an instruction to dispense money and the terminal device of the user are identified with a host name (= terminal recognition information), a user name (= terminal user information) input on a login screen, a MAC address and an IP address. Then, a password corresponding to the identified terminal device is directly input, and thus a dispensing outlet is opened. In this way, even if a plurality of terminal devices are connected, it is possible to prevent erroneous money reception. Moreover, since a determination can be made as to which one of terminal devices occupies the money handling machine, it is possible to accurately and easily perform exclusion control.

When the money handling machine identifies a terminal device, a determination is made as to whether the terminal device is a supervisor terminal device used by a supervisor or a general terminal device used by a general user such as a teller. When an instruction to perform processing requiring a supervisor approval is received from a general terminal device, a notification is provided for the supervisor terminal device. Thus, it is possible to quickly perform the approval processing of the supervisor.

Moreover, when a terminal device that can control the money handling machine is registered in the money handling machine, registration processing is performed by combining an operation on the terminal device with an operation on the money handling machine. Thus, even if a malicious third party attempts to control the money handling machine from an external terminal device, it is impossible to register the external terminal device in the money handling machine, with the result that it is possible to prevent the third party from taking over the money handling machine.

A browser is installed in the money handling machine, and thus a teller can control the money handling machine with the browser. Hence, even when it is necessary to modify the display portion and the operation portion of the money handling machine due to modification of the specifications of the money handling machine, it is unnecessary to replace components or perform other operations. Thus, it is possible to reduce cost when the specifications are modified.

### Brief Description of Drawings

[Fig. 1] An appearance schematic diagram showing the configuration of a money depositing and dispending machine according to an embodiment of the present invention;
[Fig. 2] A schematic cross-sectional view showing the configuration of a machine block of the money depositing and dispending machine shown in Fig. 1;
[Fig. 3] A block diagram showing the configuration of a function portion of the money depositing and dispending machine shown in Fig. 1;
[Fig. 4] A block diagram showing the configuration of a money handling machine system according to the embodiment of the invention;
[Fig. 5] A screen diagram showing a menu screen displayed on a terminal device in the money handling machine system shown in Fig. 4;
[Fig. 6] A schematic diagram showing a flow of processing when mechanism processing is required in the money handling machine system shown in Fig. 4;
[Fig. 7] A screen diagram showing a supervisor approval screen displayed on the terminal device in the money handling machine system shown in Fig. 4;
[Fig. 8] A screen diagram showing a supervisor approval request screen displayed on a money depositing and dispensing machine in the money handling machine system shown in Fig. 4;
[Fig. 9] A schematic diagram showing a flow of processing when a supervisor approval is required in the money handling machine system shown in Fig. 4;
[Fig. 10] A screen diagram showing a state display screen displayed on the money depositing and dispensing machine in the money handling machine system shown in Fig. 4;
[Fig. 11] A schematic diagram showing a flow of processing when occupation processing is required in the money handling machine system shown in Fig. 4;
[Fig. 12] A block diagram showing the configuration of the money handling machine system shown in Fig. 4 when a terminal device is newly added thereto;
[Fig. 13] A schematic diagram showing a flow of processing when processing for registering a terminal device is required in the money handling machine system shown in Fig. 4;
[Fig. 14] A block diagram showing another embodiment on the display portion of the money depositing and dispensing machine shown in Fig. 1;
[Fig. 15] A block diagram showing another embodiment on the display portion of the money depositing and dispensing machine shown in Fig. 1;
[Fig. 16] A block diagram showing another embodiment on the operation portion of the money depositing and dispensing machine shown in Fig. 1;
[Fig. 17] A block diagram showing the configuration of a conventional money handling machine system; and
[Fig. 18] A block diagram showing the configuration of a conventional money handling machine system.

### List of Reference Symbols

- 11: Money depositing and dispensing machine (money handling machine)
- 61: Control portion
- 63: Operation portion
- 64: Display portion
- 67: Web server portion
- 68: Communication interface portion
- 69: Web client portion
- 71: Money transaction processing function
- 71a: Depositing processing function
- 71b: Dispensing processing function
- 71c: Replenishing processing function
- 71d: Collection processing function
- 72: Information display processing machine
- 81: Money balance information
- 82: Transaction history information
- 83: Setting information
- 84: Supervisor information (manager information)
- 85: General user information
- 90: Specific information
- 91: Terminal identification information
- 92: Terminal user information
- 93: IP address
- 94: MAC address
- 95: Password
- 95: Particular registration information (the first registration information)
- 111: LAN (communication network)
- 112: Supervisor terminal device (terminal device)
- 113: General terminal device (terminal device)

### Best Mode for Carrying Out the Invention

An embodiment of the present invention will be described blow with reference to the accompanying drawings. In the following description, a money handling machine of this embodiment will be discussed by way of example, using a money depositing and dispensing machine that can deposit and dispense banknotes and money. This money depositing and dispensing machine is installed in a reception counter in a financial institution such as a back and is operated by tellers.

### <1. Mechanical configuration>

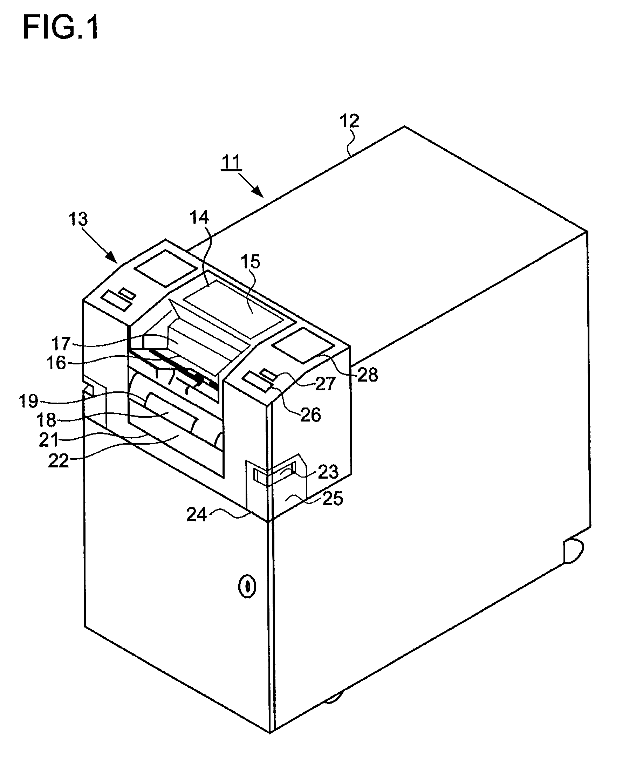

The mechanical configuration of the money depositing and dispensing machine 11 (= money handling machine) of this embodiment will first be described with reference to Fig. 1, which is an appearance schematic diagram. As shown in Fig. 1, the money depositing and dispensing machine 11 of this embodiment has a device main body 12. The device main body 12 is uprightly mounted such that the device has a narrow width (in a left and right direction as seen from the front surface) and a wide depth (in a forward and backward direction as seen from the front surface). A processing unit group 13 is arranged from the front side of the upper surface of the device main body 12 to the upper side of the front surface.

In the middle of the front side of the upper surface of the processing unit group 13 in the width direction, there is formed a coin depositing inlet 14 that is open upward. The coin depositing inlet 14 is automatically opened and closed by a shutter 15. The opening of the shutter 15 allows coins to be inserted.

In the middle of the uppermost portion of the front surface of the processing unit group 13 in the width direction and in front of the coin depositing inlet 14, there is formed a banknote depositing inlet 16 that is open obliquely upward. The banknote depositing inlet 16 is automatically opened and closed by a shutter 17. The opening of the shutter 17 allows banknotes to be inserted. The banknote is inserted into the banknote depositing inlet 16 with the longitudinal direction of the banknote coinciding with the width direction of the device and the short direction of the banknote coinciding with the depth direction of the device.

In the middle of the front surface of the processing unit group 13 in the width direction and below the banknote depositing inlet 16, there is formed a banknote dispensing outlet 18 that is opened obliquely upward. The banknote dispensing outlet 18 is automatically opened and closed by a shutter 19. The opening of the shutter 19 allows banknotes dispensed out of the device to be removed from the banknote dispensing outlet 18.

In the middle of the front surface of the processing unit group 13 in the width direction and below the banknote dispensing outlet 18, there is formed a reject box outlet 21 that is open frontward; a reject box 22 for storing reject banknotes is removably placed within the reject box outlet 21. The reject box outlet 21 is configured so as to be locked and unlocked by an unillusrated locking mechanism.

In the left and right ends of the front surface of the processing unit group 13 in the width direction and in the vicinity of the banknote dispensing outlet 18, there are formed coin dispensing outlets 23 for tellers on the left and right sides. The coin dispensing outlets 23 are placed in concave coin dispensing box fitting portions 24 that are formed in the left and right ends of the device main body 12 in the width direction; coin dispensing boxes 25 for receiving coins dispensed out of the device are removably arranged at the coin dispensing box fitting portions 24. The coin dispensing boxes 25 in a state where they are placed in the coin dispensing box fitting portions 24 are configured so as to be locked and unlocked by an unillusrated locking mechanism.

In the left and right ends of the upper surface of the processing unit group 13 in the width direction, there are provided operation button groups 26 for the tellers on the left and right sides. In the vicinity of the operation button groups 26, occupation lamps 27 are provided that indicate the occupation state of each processing unit when the tellers on the left and right sides perform money depositing and dispensing processing or the like. For example, the occupation lamps 27 are configured such that, when the corresponding processing unit is occupied, the occupation lamp 27 is lit, and that, when the corresponding processing unit is not occupied, the occupation lamp 27 is unlit; that is, the occupation lamps 27 are configured such that they are lit or unlit as required.

In the right side of the upper surface of the processing unit group 13, there is provided a display panel 28. On the display panel 28, for example, a message, a guidance message or the like is displayed when trouble occurs. The display panel 28 may be formed with an LCD that includes a touch panel module internally. By doing so, it is possible not only to display information but also to perform various operations with the touch panel, such as the selection of types of processing, for example, the insertion of banknotes and coins, the closing balance collection and the like, or operations such as the selection of processing units.

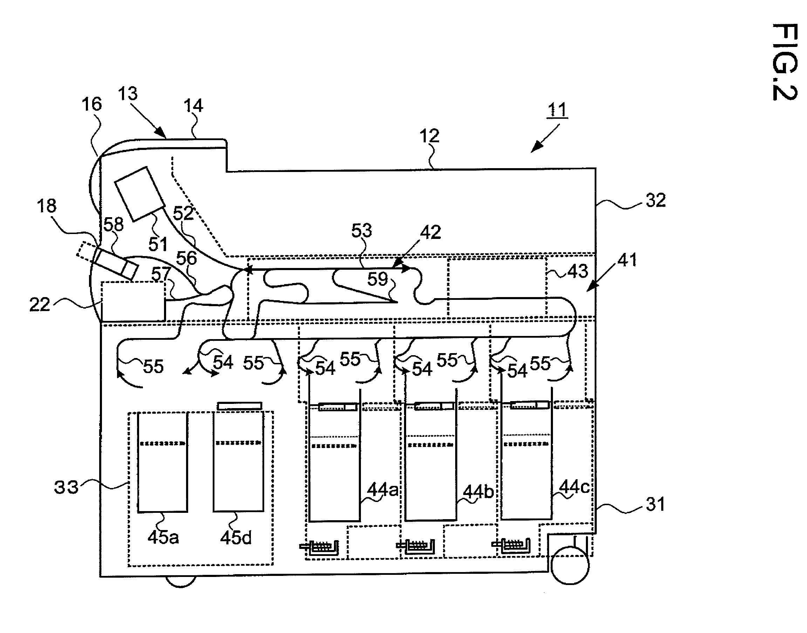

The internal and mechanical configuration of the money depositing and dispensing machine 11 will now be described with reference to Fig. 2, which is a schematic cross-sectional view. As shown in Fig. 2, the money depositing and dispensing machine 11 of this embodiment has a lower unit 31 and an upper unit 32; the lower unit 31 and the upper unit 32 are configured to be removable.

In Fig. 2, a banknote handling unit 41 is one that uses deposited banknotes as banknotes to be dispensed in a circulating manner, and it is placed within the device main body 12. The banknote handling unit 41 is provided with: a banknote transport portion 42; a banknote recognition unit 43; stacking units for different denominations 44a to 44c; and a banknote cassette 33 having a plurality of cassettes 45a and 45b.

The banknote transport portion 42 transports banknotes according to depositing processing performed on banknotes to be inserted and deposited into the banknote depositing inlet 16 and dispensing processing performed on banknotes to be dispensed to the banknote dispensing outlet 18. The banknote transport portion 42 is composed of a belt mechanism, a roller mechanism and the like that can bidirectionally transport banknotes. In the following description, the direction in which banknotes are transported from the banknote depositing inlet 16 refers to a "forward direction", and the reverse direction of this forward direction is referred to as a "reverse direction."

The banknote transport portion 42 is composed of: a banknote depositing portion 51 that receives banknotes from the banknote depositing inlet 16 and that feeds the banknotes one by one; a deposit transport path 52 that transports the banknote fed from the banknote depositing portion 51; and a circulation transport path 53 that receives and transports the banknote from the deposit transport path 52. As transport paths that transport banknotes, in the forward direction, from the circulation transport path 53 individually to the stacking units 44a to 44c and the cassettes 45a and 45b, introduction transport paths 54 are formed. As transport paths that feed banknotes, in the reverse direction, from the stacking units 44a to 44c and the cassettes 45a and 45b to the circulation transport path 53, feeding transport paths 55 are formed.

A dispensing transport path 56 that transports a banknote from the circulation transport path 53 to the banknote dispensing outlet 18 and a reject transport path 57 that transports a reject banknote from the circulation transport path 53 to the reject box 22 are also formed. A banknote dispensing portion 58 collects the banknotes transported through the dispensing transport path 56 and transfers the collected banknotes forward out of the banknote dispensing outlet 18. A side reversing portion 59 reverses both sides of a banknote halfway through the circulation transport path 53.

The stacking units 44a to 44c correspond to all denominations of banknotes and are arranged in parallel on a denomination-by-denomination basis; they receive and store banknotes according to denominations from the circulation transport path 53 in the banknote transport portion 42 through the corresponding introduction transport paths 54. The stacking units 44a to 44c are configured such that they can feed the stored banknotes through the feeding transport paths 55 to the circulation transport path 53.

### <2. Functional configuration>

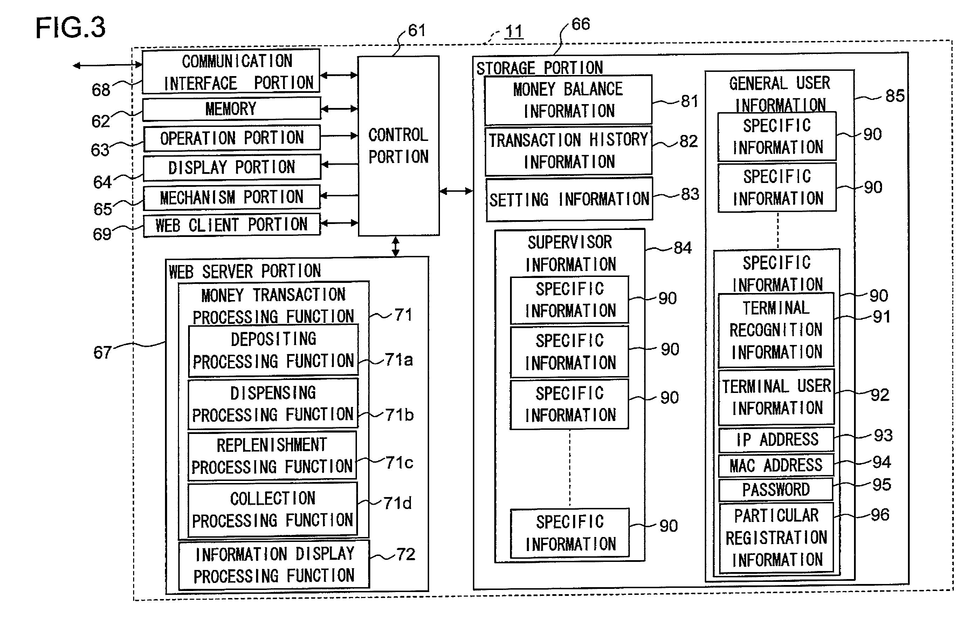

The functional configuration of the money depositing and dispensing machine 11 having the above-described mechanical configuration will now be described with reference to Fig. 3, which is a functional block diagram. As shown in Fig. 3, the money depositing and dispensing machine 11 of this embodiment is provided with: a control portion 61 that controls the operations of individual portions of the money depositing and dispensing machine 11; a memory 62 that temporarily stores various types of data retained by the money depositing and dispensing machine 11; an operation portion 63 that is composed of the operation button groups 26 (Fig. 1) for directly operating the money depositing and dispensing machine 11; a display portion 64 that uses the display panel 28 (Fig. 1) to display the data retained by the money depositing and dispensing machine 11; a mechanism portion 65 that is composed of various mechanisms shown in Figs. 1 and 2; a storage portion 66 that stores the data retained by the money depositing and dispensing machine 11; a web server portion 67 that performs programs on a control circuit board using the kernel of an open-source OS and thereby functions as a web server; a communication interface portion 68; and a web client portion 69.

The storage portion 66 internally stores: money balance information 81 that indicates the balance of money stored in the stacking units 44a to 44c; transaction history information 82 that indicates information on transactions that have been performed since a certain time and date which is a predetermined amount of time ago; setting information 83 that indicates information on various settings required for the operation of the money depositing and dispensing machine 11, for example, the address information of the communication interface portion 68, the types of processing requiring the approval of a supervisor and the like; supervisor information 84 (= manager information) that indicates the supervisor who can use all functions of the money depositing and dispensing machine 11 and a terminal device used by the supervisor; and general user information 85 that indicates general users who can use part of the functions of the money depositing and dispensing machine 11 and terminal devices used by general users.

The supervisor information 84 and the general user information 85 are each composed of a plurality of pieces of specific information 90. The specific information 90 includes: terminal recognition information 91 that indicates the host name or the like of a terminal device; terminal user information 92 that indicates a user using a terminal device; an IP address 93 that indicates an IP address assigned to a terminal device; a MAC address 94 that indicates a MAC address unique to the network card of a terminal device; a password 95 that indicates a password required to be input in advance when a terminal device controls the money depositing and dispensing machine 11; and particular registration information 96 (= the first registration information) that is a one-time password temporarily used when a terminal device is newly registered in the money depositing and dispensing machine 11.

The web server portion 67 is provided with: a money transaction processing function 71 that can instruct the control portion 61 to perform various types of money transaction processing; and an information display processing function 72 that acquires, from the storage portion 66, the money balance information 81, the transaction history information 82 and the setting information 83 to generate HTML data or the like, and that can transmit, with the communication interface portion 68, it to a terminal device located externally.

The money transaction processing function 71 includes: a depositing processing function 71a that instructs the control portion 61 to transport and store money put in the coin depositing inlet 14 and the banknote depositing inlet 16; a dispensing processing function 71b that instructs the control portion 61 to transport money to the banknote dispensing outlet 18 and the coin dispensing outlets 23 such that the money can be removed; a replenishing processing function 71c that instructs the control portion 61 to replenish money to the stacking units 44a to 44c from the outside of the device; and a collection processing function 71d that instructs the control portion 61 to collect money from the stacking units 44a to 44c to feed it out of the device.

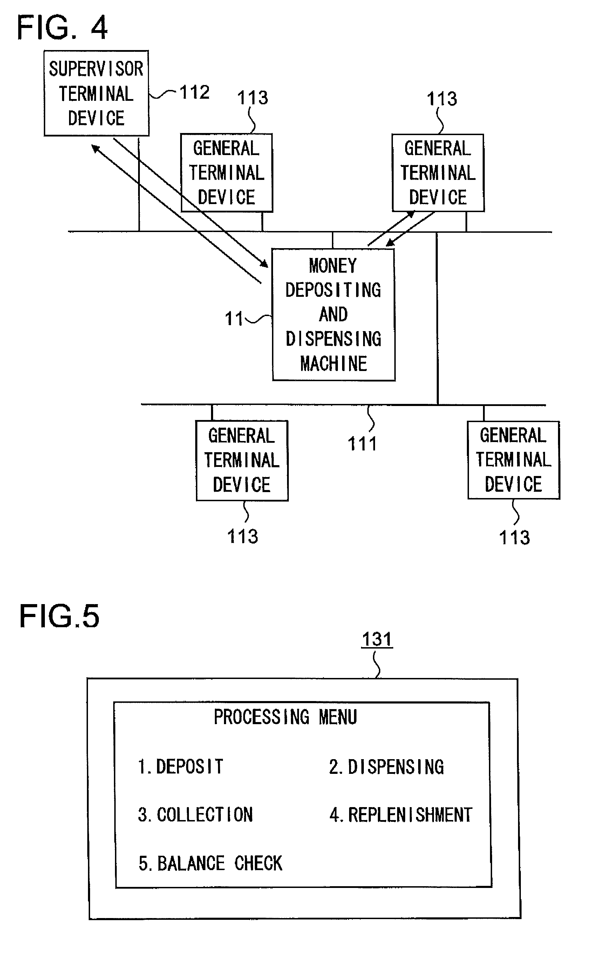

The web server portion 67 communicates with a terminal device connected thereto through the communication interface portion 68 according to the protocol of TCP/IP or HTTP. In this way, the terminal device transmits instruction data so that the above-described functions of the web server portion 67 are performed from the terminal device. The instruction data is data that is used for displaying, in the browser of the terminal device, at least a menu screen (Fig. 5) through which to select and perform any of the above-described functions and detailed instruction screen of the functions and for waiting for an instruction; the instruction data is formed with, for example, text data, image data or CGI data. The user performs operations on a screen displayed by the instruction data, and thus it is possible to transmit various instructions such as an instruction to perform dispensing processing to the web server portion 67. Preferably, the instruction data is mainly formed with, for example, HTML data, which is widely used on the Internet.

The web server portion 67 is formed with a circuit board or the like using, for example, the kernel of a conventionally available open-source OS. This circuit board is a control circuit board composed of a computation device such as a CPU and a storage device such as a ROM. This kernel controls the operations or the like of various devices installed in the circuit board and server applications, with the result that the web server portion 67 performs functions equivalent to a general web server.

The communication interface portion 68 makes the money depositing and dispensing machine 11 connect to an IP communication network such as a LAN 111 (Fig. 4), and thereby inputs and outputs electrical signals. Specifically, for example, the communication interface portion 68 is formed with a LAN terminal and the like corresponding to communication standards such as 100BASE-TX; a twist pair cable is inserted into this terminal and thus it is possible to communicate with the IP communication network. A wireless device may be provided that can connect to a wireless LAN corresponding to wireless communication standards such as IEEE802.11.

The web client portion 69 has a browser function through which web services provided by web servers on networks and the web server portion 67 can be utilized. Specifically, a browser application stored in a ROM (not shown) or the like is read and performed, and thus the browser is displayed on the display portion 64. The user uses this browser to access the web server portion 67 and thereby can utilize various functions provided by the web server portion 67.

### <3. The configuration of a money handling machine system>

The configuration of a money handling machine system incorporating the above-described money depositing and dispensing machine 11 will now be described with reference to the block diagram of Fig. 4. As shown in Fig. 4, the money handling machine system of the invention is provided with: the money depositing and dispensing machine 11; the LAN 111 (= communication network) through which a plurality of apparatuses are connected in a local environment; a supervisor terminal device 112 (= terminal device in which stored specific information is manager information) connected to the LAN 111; and general terminal devices 113 (= terminal devices whose specific information is general user information). In this embodiment, at least one supervisor terminal device 112 is assumed to be installed in the LAN 111, and this embodiment will be described accordingly.

The supervisor terminal device 112 and the general terminal devices 113 incorporates a browser; a HTTP communication function included in the browser allows the supervisor terminal device 112 and the general terminal devices 113 to communicate with the web server portion 67 of the money depositing and dispensing machine 11. Thus, each screen based on the instruction data generated by the web server portion 67 is displayed on the browser of each terminal device, and, according to its contents, it is possible for the user to transmit instructions for various types of processing.

The supervisor terminal device 112 is used by the supervisor, and is one with which it is possible to utilize all functions of the money depositing and dispensing machine 11. For example, it is possible not only to perform normal money depositing and dispending processing but also to receive an approval for processing requiring an approval of the supervisor and vary various settings of the money depositing and dispensing machine 11. The browser included in the supervisor terminal device 112 internally accesses the web server portion 67 of the money depositing and dispensing machine 11 at regular intervals; when processing requiring an approval is required, a screen indicating it is displayed on the browser.

On the above-described screen, the supervisor can input a recognition code (= terminal user information), a password or the like to perform approval processing. Specific examples of the processing requiring the approval of the supervisor include the dispensing of a large amount of money, an alternative denomination transaction, processing on the number of banknotes received and an approval after failure recovery. Since the money depositing and dispensing machine 11 has stored the contents of an approval and its results in the storage portion 66 for a predetermined period of time, it is possible to reference them through the browser of the supervisor terminal device 112.

As shown in Fig. 3, information on the supervisor terminal device 112 such as the IP address and the MAC address is stored in the supervisor information 84 of the storage portion 66. Information on the general terminal device 113 is stored in the general user information 85. The web server portion 67 receiving a communication request from a terminal device references the IP address 93, the MAC address 94 or the like included in the specific information 90 of both types of information to determine which one of the supervisor terminal device 112 and the general terminal device 113 is a communication request transmitting terminal.

Instead of using the IP address or the MAC address to determine a terminal device, the web server portion 67 generates HTML data requiring the user to input user information such as a recognition code or a password and transmits it to the terminal device, and, based on information that is input, functions that can be utilized from the terminal device may be determined. In this case, the terminal user information 92 and the password 95 shown in Fig. 3 are referenced, and thus a determination is made as to which one of a general user or a supervisor is the user who has made a request.

An example of the menu screen displayed on a terminal device will now be described with reference to the screen diagram of Fig. 5. The menu screen 131 shown in Fig. 5 shows a screen displayed on a display included in the terminal device when the browser of the terminal device access the web server portion 67. With this screen, it is possible to give an instruction to perform a function of the money depositing and dispensing machine 11, such as depositing processing or dispensing processing.

Hence, it is unnecessary to install, in the terminal device, software other than the browser in order to control the money depositing and dispensing machine 11. Moreover, when the system is upgraded, it is unnecessary to upgrade the terminal device, and the modification of the distributed instruction data makes it possible to use the updated function.

### <4. Mechanism processing>

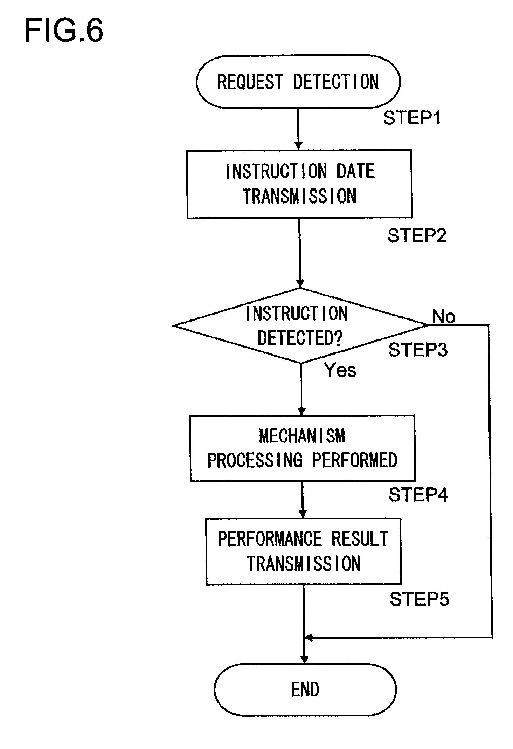

The mechanism processing of the money depositing and dispensing machine 11 in the money handling machine system of this embodiment will now be described with reference to the flowchart of Fig. 6. Fig. 6 shows a flow of the mechanism processing performed by the money depositing and dispensing machine 11 when it receives requests from browsers included in the supervisor terminal device 112 and the general terminal device 113.

As shown in Fig. 6, when the web server portion 67 detects the receipt of a communication request from a terminal device (step 1), it first generates, with the information display processing function 72, instruction data corresponding to the communication request, and transmits, with the communication interface portion 68, it to the terminal device of a request source (step 2).

Consequently, on the screen of the terminal device, the menu screen 131 shown in Fig. 5 is displayed. The user can instruct, by viewing the menu screen 131 to operate the terminal device, the money depositing and dispensing machine 11 to perform various types of processing displayed on the menu screen 131. When the web server portion 67 receives the instruction from the terminal device (step 3), an instruction to perform mechanism processing corresponding to the instruction is given to the control portion 61 (step 4). In step 3, if no instruction has been received from the terminal device for a predetermined period of time, this processing is completed.

For example, when "1. Deposit" on the menu screen 131 is selected in the terminal device, processing on the opening of the shutter 17 shown in Fig. 1, processing on the transportation of banknotes from the banknote depositing portion 51 shown in Fig. 2 to the stacking units 44a to 44c and other types of processing are performed by the control portion 61.

After the mechanism processing described above is performed, the information display processing function 72 generates HTML data indicating the result of the processing and transmits it to the terminal device of the request source (step 5), with the result that this processing is completed. Types of processing that instructions can be given to perform through the menu screen 131 are not limited to an example shown in Fig. 5; for example, an instruction to modify various types of setting information on the money depositing and dispensing machine 11, an instruction to perform maintenance or an instruction to perform other operations may be given.

### <5. Approval processing>

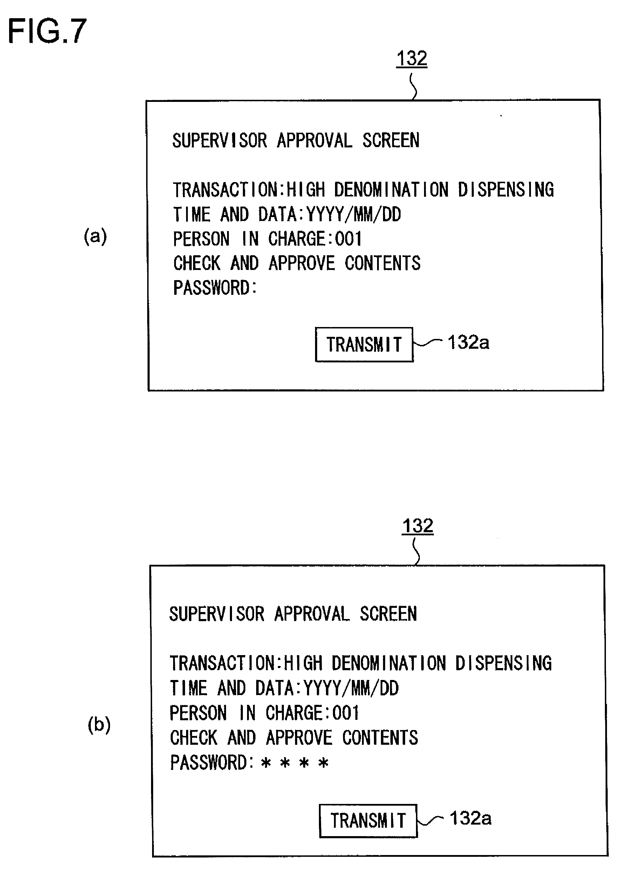

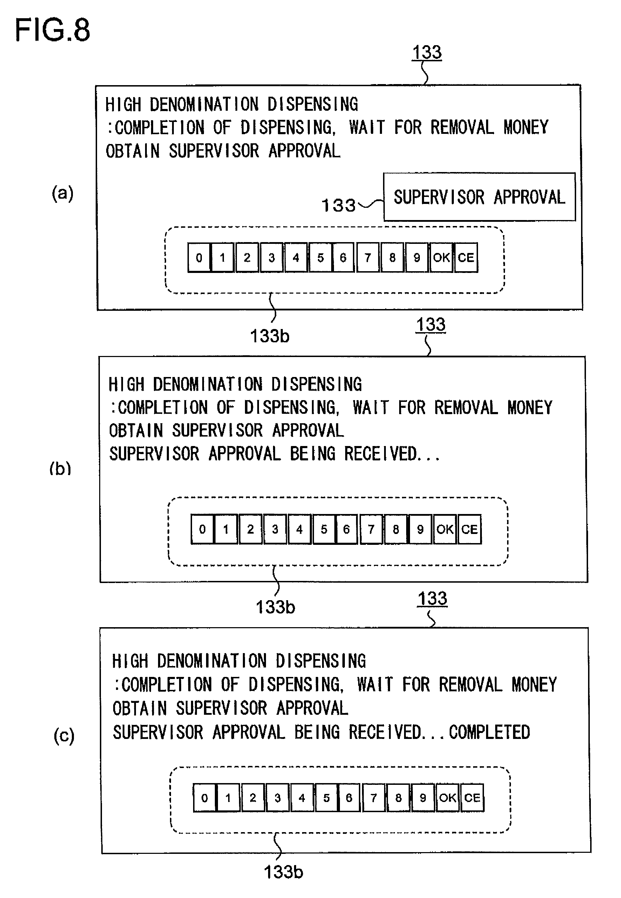

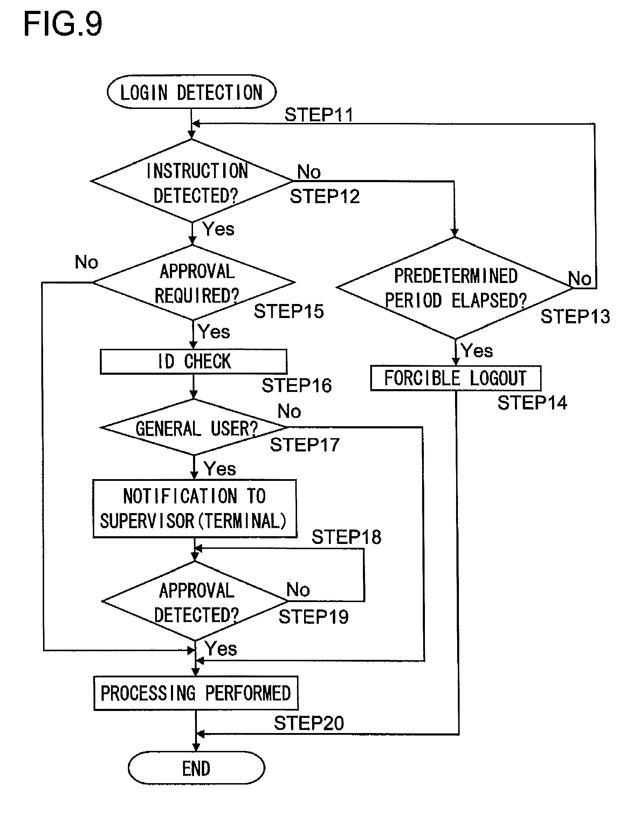

The supervisor approval processing of the money handling machine system of this embodiment will now be described with reference to the screen diagrams of Figs. 7 and 8 and the flowchart of Fig. 9. Fig. 7 shows an example of a supervisor approval screen 132 displayed on the supervisor terminal device 112 when processing requiring the approval of the supervisor is required. Fig. 8 shows an example of an approval request screen 133 displayed on the display portion 64 of the money depositing and dispensing machine 11. Fig. 9 shows a flow of the approval processing performed between the web server portion 67 and the supervisor terminal device 112 when the above-described processing is required.

At the start of the flow of the processing shown in Fig. 9, the web server portion 67 detects, from the supervisor terminal device 112 or the general terminal device 113, a requirement to perform login processing (step 11). A browser accesses a URL (uniform resource locator) to display a specific screen provided by the web server portion 67, for example, a login screen, and thus the requirement to perform the login processing is carried out. The information display processing function 72 receives this requirement to transmit instruction data for displaying the login screen to the terminal device of the request source.

The terminal device receiving the instruction data displays the login screen on the browser with the instruction data, and it is placed on standby for the input of a user name and a password. When these two pieces of information are input and transmitted to the money depositing and dispensing machine 11, the control portion 61 determines whether or not they agree with the terminal user information 92 and the password 95, which are previously stored in the storage portion 66, and, if they agree with them, the login is permitted. In addition, whether the identified specific information 90 including the terminal user information 92 is included in the supervisor information 84 or in the general user information 85 is determined. From this result, whether the user who logs in is a supervisor or a general user is determined. The result of the determination is stored in the memory 62.

Then, the web server portion 67 determines whether or not an instruction is received from the terminal device that has logged in (step 12). If a predetermined period of time has elapsed without any instruction being received (step 13), logout processing is forcibly performed (step 14), with the result that this processing is completed.

If, in step 12, an instruction is received within a predetermined period, the control portion 61 determines whether or not the received instruction is an instruction requiring the approval of a supervisor (step 15). Preferably, it is possible to appropriately change, according to how the device is operated, the setting as to which types of processing require the approval of the supervisor.

If, in step 15, the received instruction is determined not to be an instruction requiring the approval of the supervisor, the control portion 61 performs the required processing (step 20), with the result that this processing is completed. By contrast, if the received instruction is determined to be an instruction requiring the approval of the supervisor, whether the request source is a general user or a supervisor is determined (step 17).

For example, this determination is performed by referencing the above-described result of the determination stored in the memory 62 in step 11. Alternatively, the MAC address and the IP address included in a communication request are compared with the specific information 90 stored in the storage portion 66, and the determination may be made according to whether the two addresses are included in the supervisor information 84 or in the general user information 85. These two methods may be combined together.

If the request source is determined to be a supervisor, the control portion 61 performs the required processing (step 20), with the result that this processing is completed. By contract, if the request source is determined to be a general user, a notification that an approval is required is provided for the supervisor (step 18).

Specifically, for example, when, in step 17, the request source is determined to be a general user, the approval request screen 133 shown in Fig. 8 is displayed on the display portion 64 of the money depositing and dispensing machine 11. The approval request screen 133 includes a touch-panel supervisor approval button 133a and a touch-panel recognition code input portion 133b. The user inputs a recognition code for each terminal device (or for each user) with the recognition code input portion 133b, and then presses down the supervisor approval button 133a.

Consequently, the notification is given to the supervisor terminal device 112, and the supervisor approval screen 132 shown in Fig. 7 is displayed on the browser of the supervisor terminal device 112. On the supervisor approval screen 132, the supervisor inputs, as shown in Fig. 7(b), a password and presses down a transmission button 132a, and thereby transmits an approval notification to the web server portion 67.

After step 18, the control portion 61 determines whether or not the approval notification from the supervisor is detected (step 19). If it is not detected, step 19 is repeated. If step 19 is repeated predetermined times and no approval notification is detected, the dispensing outlet is preferably closed in the case of, for example, dispensing processing. By contrast, if the approval notification is detected, the control portion 61 performs the required processing (step 20), with the result that this processing is completed.

As described above, when the processing requiring the approval of the supervisor is required, it is possible for the supervisor not only to reliably find that the processing requires the approval but also to perform the approval processing without leaving the desk of the supervisor.

### <6. Exclusion control processing>

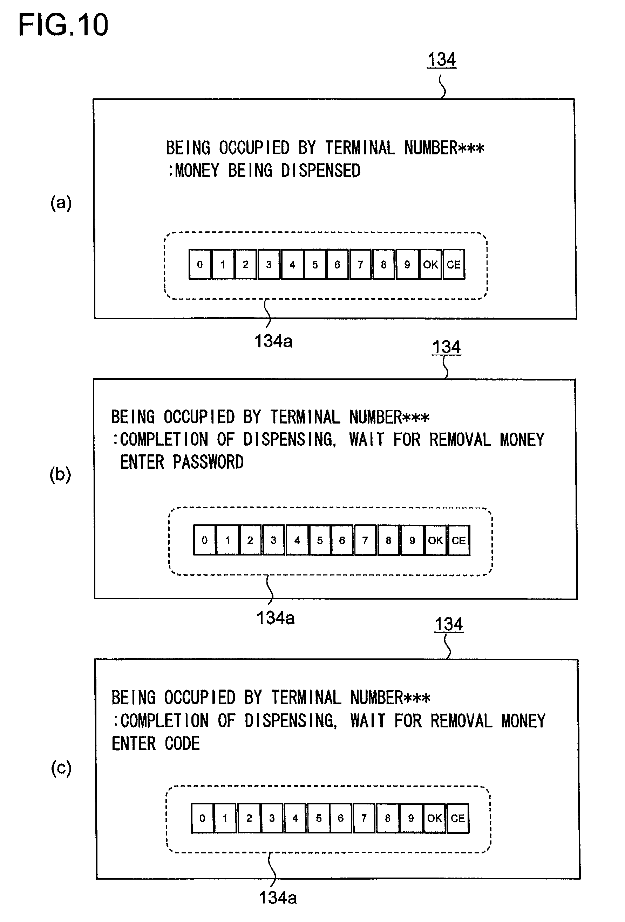

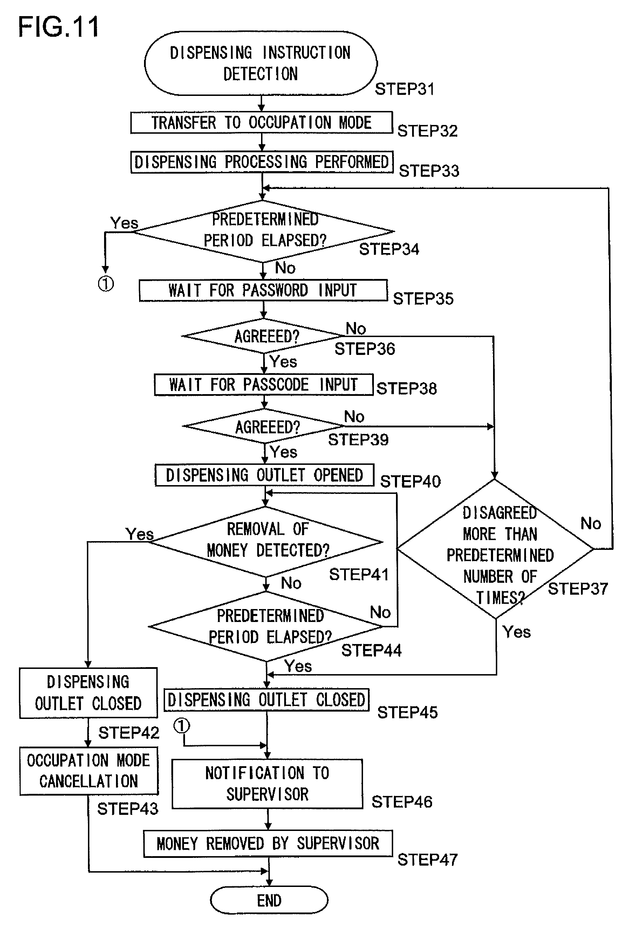

The exclusion control processing of the money handling machine system of this embodiment will now be described with reference to the screen diagram of Fig. 10 and the flowchart of Fig. 11. FIG. 10 shows an example of a state display screen 134 displayed on the display portion 64 of the money depositing and dispensing machine 11 when processing is required that temporarily occupies the mechanism portion 65 of the money depositing and dispensing machine 11. Fig. 11 shows a flow of the exclusion control processing for rejecting access from other terminal devices when the processing is required, which temporarily occupies the money depositing and dispensing machine 11. In this embodiment, as processing involving the occupation, processing for dispensing banknotes from the banknote dispensing outlet 18 will be described by way of example.

At the start of the flow of the processing shown in Fig. 11, the web server portion 67 detects the requirement of processing in which the mechanism portion 65 is temporarily occupied by the supervisor terminal device 112 or the general terminal device 113, namely, dispensing processing in this example (step 31). If this requirement is detected, the control portion 61 brings the money depositing and dispensing machine 11 into an occupation mode (step 32).

In the occupation mode, even when the requirement of separate processing involving the occupation is received from other terminal devices, it is rejected, and a notification indicating the use of the occupation mode is provided. Even in the occupation mode, it is possible to normally receive an instruction on processing, such as for displaying information retained by the money depositing and dispensing machine 11, that does not involve the occupation.

After the money depositing and dispensing machine 11 is brought into the occupation mode, the control portion 11 uses the mechanism portion 65 to perform the dispensing processing. Consequently, banknotes corresponding to a required amount of money are transported from the stacking units 44a to 44c to the banknote dispensing outlet 18 (step 33). Here, the state display screen 134 shown in Fig. 10(a) is displayed on the display portion 64, and thereby indicates that the dispensing processing is being performed.

Then, the control portion 61 determines whether or not a predetermined period of time has elapsed after the completion of the transportation of the banknotes (step 34). If the predetermined period of time has elapsed, the process proceeds to step 46, which will be described later, and, in which a notification indicating that the dispensed money is not removed and left behind is provided for the supervisor. If the predetermined period of time has not elapsed, as shown in Fig. 10(b), the state display screen 134 indicating the request for input of a password is displayed on the display portion 64, and the money depositing and dispensing machine 11 is placed on standby for the input (step 35).

On this screen, when a password is input with a touch-panel input portion 134a, the control portion 61 determines whether or not the password that is input agrees with the predetermined password (step 36). If it agrees with the predetermined password, as shown in Fig. 10(c), it is placed on standby for the input of a recognition code for each terminal device (or for each user) (step 38). On this screen, when the recognition code is input with the touch-panel input portion 134a, the control portion 61 determines whether or not the recognition code agrees with what is previously stored in the storage portion 66 (step 39). If the recognition code agrees with it, the shutter 19 is opened (step 40), and this allows banknotes to be removed.

If, in steps 36 and 39, the password or the recognition code does not agree with the predetermined one, whether it disagrees more than a predetermined number of times is determined (step 37). If it disagrees more than the predetermined number of times, the process proceeds to step 45, which will be described later, and, in which the banknote dispensing outlet 18 is closed. If it disagrees the predetermined number of times or less, the process returns to step 34 described previously.

If, in step 40, it is detected that the dispensed banknotes are removed with the banknote dispensing outlet 18 open (step 14), the control portion 61 closes the shutter 19 (step 42), and the occupation mode is cancelled (step 43), with the result that this processing is completed. Whether or not the banknotes are removed is detected with a sensor (not shown) or the like provided within the banknote dispensing outlet 18.

If, in step 41, it has not been detected for a predetermined period of time that the banknotes are removed (step 44), the control portion 61 closes the banknote dispensing outlet 18 (step 45). Then, a notification that the money depositing and dispensing machine 11 is left occupied because the money is left behind is given to the supervisor by the use of the web server portion 67 (step 46).

The supervisor receiving the notification cancels the closing of the banknotes dispensing outlet 18, and thus the shutter 19 is opened and the occupation mode is transferred to the normal mode, with the result that it is possible to removed the dispensed money from the banknote dispensing outlet 18 (step 47). The cancellation of the closing by the supervisor may be performed with, for example, the supervisor approval screen displayed on the browser of the supervisor terminal device 112 or may be performed by the supervisor with the operation portion 63 of the money depositing and dispensing machine 11. Thus, even when the dispensed money has been left behind for more than a predetermined period of time, it is possible to bring the money depositing and dispensing machine 11 back into a state in which the money depositing and dispensing machine 11 can be used by other terminal devices.

### <7. Terminal registration processing>

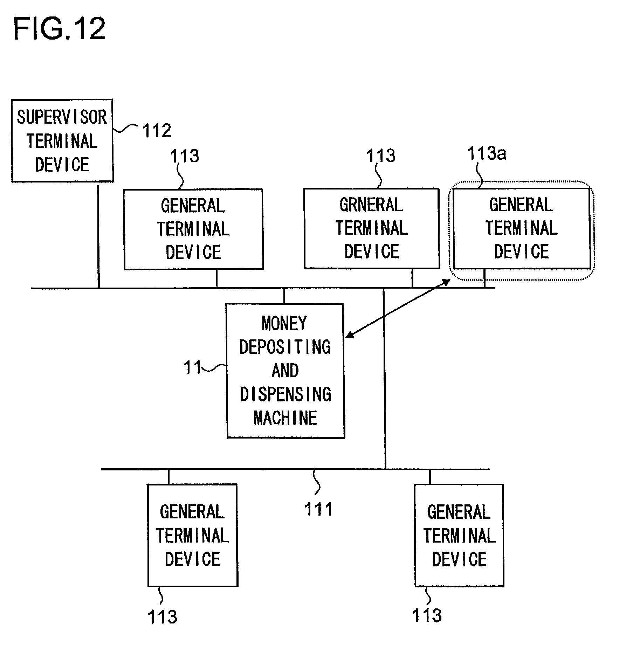

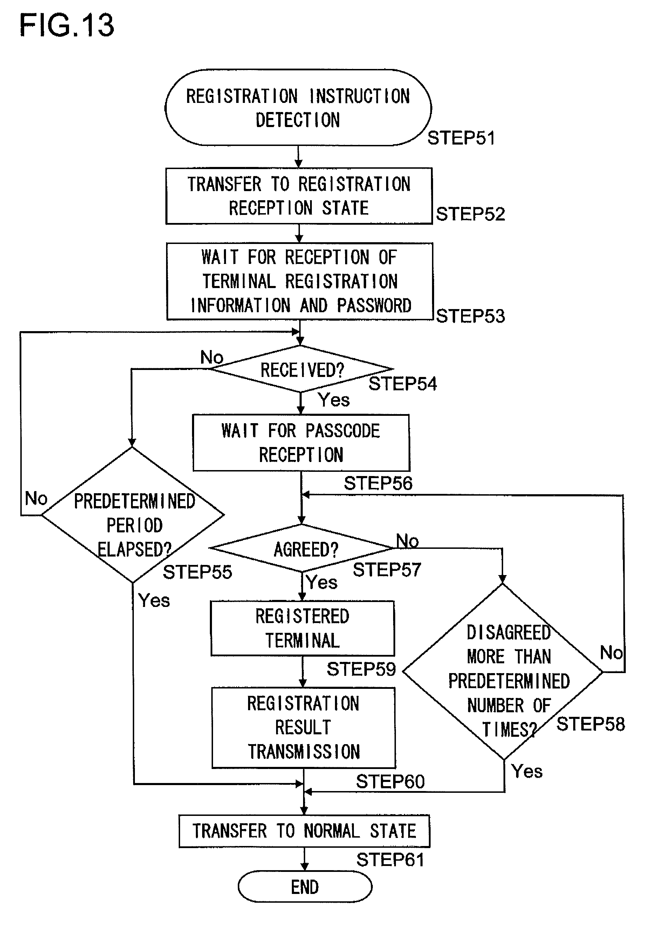

Registration processing on a terminal device that is newly added to the money handling machine system of this embodiment will now be described with reference to the block diagram of Fig. 12 and the flowchart of Fig. 13. Fig. 12 shows a network configuration in which a general terminal device 113a that is a newly added terminal device is connected to the LAN 111. Fig. 13 shows a flow of the terminal registration processing that is previously required for the general terminal device 113a to control the money depositing and dispensing machine 11.

At the start of the flow of the processing shown in Fig. 13, the control portion 61 detects an instruction to transfer to a registration reception state in which to newly register a terminal (step 51). The instruction to transfer to the registration reception state is given by a predetermined operation using, for example, the operation portion 63. Preferably, it is impossible to transfer to the registration reception state by an instruction from a device, such as a terminal device, that is externally connected to the money depositing and dispensing machine 11. In this way, since the user cannot perform the terminal registration processing unless the user is in the vicinity of the money depositing and dispensing machine 11, it is possible to enhance security.

The control portion 61 receiving the instruction to transfer to the registration state transfers to the registration reception state (step 52), and waits to receive terminal registration information and a one-time password from the general terminal device 113a (step 53). The one-time password refers to a password that is temporarily used when a terminal is registered, and differs from the password 95 used when a registered terminal device logs in.

In the registration reception state, the general terminal device 113a accesses the URL of a terminal registration screen provided by the web server portion 67, and thus the terminal registration screen is displayed on the browser. On this screen, the user can input the terminal registration information and the one-time password, and transmit them to the web server portion 67.

The terminal registration information refers to information necessary to identify the general terminal device 113a on a network, and, for example, a host name, an IP address, a MAC address or the user name, the recognition code or the like of the general terminal device 113a is used. Since, when the IP address or the MAC address is only used as the terminal registration information, the data thereof is included in communication packets transmitted and received during the terminal registration processing, the input of the terminal registration information may be omitted.

After transfer to a reception waiting state, if the terminal registration information and the one-time password have not been received for a predetermined period of time (steps 54 and 55), the control portion 61 cancels the reception waiting state to transfer to the normal state (step 61), with the result that this processing is completed. By contrast, if the terminal registration information and the one-time password are received within a predetermined period of time (steps 54), the control portion 61 uses the display portion 64 or the like to require the user to input the one-time password, and transfers to an input waiting state (step 56).

When the one-time password that is input in the input waiting state agrees with the above-described one-time password received in step 54, the control portion 61 registers the general terminal device 113a as a component of this money handling machine system. Specifically, the terminal recognition information 91 to the password 95 are generated from the received terminal registration information, and specific information 90 including these is newly produced and is added to the general user information 85.

Consequently, the general terminal device 113a can thereafter control the money depositing and dispensing machine 11. It is also possible to store the one-time password as the particular registration information 96. In this way, for example, it is possible to prevent the same one-time password from being used two or more times.

After the completion of the above-described registration processing, the web server portion 67 transmits, to the general terminal device 113a, HTML data for displaying a screen showing the registration result (step 60), and the control portion 61 makes the money depositing and dispensing machine 11 transfer to the normal state, with the result that this processing is completed (step 61).

Returning back to step 56, if the one-time password that is input in the input waiting state disagrees with the above-described one-time password received in step 54 and it disagrees more than a predetermined number of times (step 58), the general terminal device 113a is not registered, and the money depositing and dispensing machine 11 transfers to the normal state, with the result that this processing is completed (step 61).

As described above, the registration of the terminal device is performed by a combination of an operation on the money depositing and dispensing machine 11 the transfer to the registration mode and the input of the one-time password) and an operation on the general terminal device 113a (= the transmission of the terminal registration information and the one-time password). Thus, if the user wishing to perform the registration is not in the vicinity of the money depositing and dispensing machine 11, it is impossible to perform the registration. Hence, for example, it is possible to prevent an external malicious third party from registering an external terminal device in this money handling machine system to take over this money handling machine system.

Since a period of time in which the one-time password can be input is limited, even if the registration reception state is not cancelled due to an erroneous operation of the user, it is possible to automatically transfer to the normal state. Since it is unnecessary for the supervisor to manually register the specific information 90 of a terminal device to be newly registered in the money depositing and dispensing machine 11, it is possible not only to easily perform a registration operation but also to reduce the number of registration errors.

### [Other embodiments]

Although the present invention is described by way of example using the preferred embodiment and the examples, the present invention is not limited to the embodiment described above; many variations are possible within the scope of the technical idea.

Thus, the present invention can also be applied to embodiments described below.
(A) Although, in this embodiment, the web server portion 67 performs web server programs on a circuit board using the kernel of an open-source OS to realize the invention, the control portion 61 may achieve, by performing programs stored in a predetermined storage medium, a function equivalent to part or all of the functions of the web server portion 67.

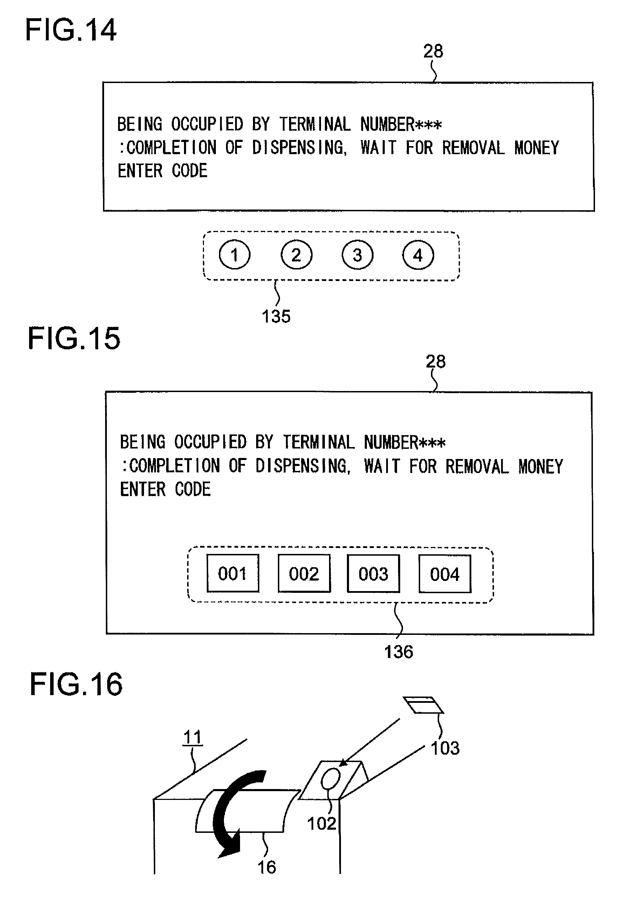

(B) Although, in this embodiment, the touch-panel LCD is used as the display panel 28, when the area of the display panel 28 is small and thus it is difficult to employ a touch-panel LCD, as shown in Fig. 14, a code input button group 135 is provided in the vicinity of the display panel 28 and a recognition code may be input therethrough.

(C) Although, in this embodiment, the touch-panel button group such as the recognition code input portion 133b (Fig. 8) and the input portion 134a (Fig. 10) is provided within the display panel 28, if the number of terminal devices connected is small, as shown in Fig. 15, a code selection button group 136 through which recognition code input can be performed with one touch may be used. Thus, it is possible to reduce a time period required for inputting the recognition code.

(D) Although, in this embodiment, when the banknote dispensing outlet 18 is closed because dispensed money is left behind, the notification is provided for the supervisor, and thus the cancellation processing is performed, if cost increase falls with a permissible range, as shown in Fig. 16, a card reader 102 is provided, and the ID card 103 of an indicator for the dispensing processing is put over the card reader 102 and thus the closing of the banknote dispensing outlet 18 may be cancelled.

(D) Although, in this embodiment, the instruction data transmitted from the web server portion to the browser of a terminal device is described by way of example using the HTML data, instruction data obtained by combining other types of data such as SWF flash data and XML data may be transmitted. Thus, it is possible to perform more various operations from a browser.

### Industrial Applicability

The present invention can be applied to a money handling machine and a money handling machine system that deposit and dispense and control money in a financial organization or the like such as a bank or a post office which deals with money received by a teller from a customer at a reception.

## Claims

1. A money handling machine for handling money comprising:
a communication interface that can be connected to a communication network; and
a web server portion that generates instruction data for providing an instruction to control the money handling machine, through a terminal device connected to the communication network, and that uses the communication interface to transmit the instruction data.

2. The money handling machine of claim 1,
wherein the instruction data is in a form that can be browsed by a web browser included in the terminal device, and the web server portion receives a browsing requirement from the web browser and transmits the instruction data to the web browser, which made the requirement.

3. The money handling machine of claim 2,
wherein the web server portion transmits the instruction data using a HTTP (hypertext transfer protocol) protocol or a HTTPS (hypertext transfer protocol security) protocol obtained by adding a data encryption function to the HTTP protocol.

4. The money handling machine of claim 2,
wherein the web server portion has a money transaction processing function of transmitting the instruction data on a money transaction and performing money transaction processing based on a response to the instruction data.

5. The money handling machine of claim 4,
wherein the money transaction processing function includes at least one of a depositing processing function of depositing money, a dispensing processing function of dispensing money, a replenishing processing function of replenishing the money to be dispensed by the dispensing processing function and a collection processing function of collecting money within the money handling machine.

6. The money handling machine of claim 2,
wherein the web server portion has an information display processing function of obtaining and transmitting, to the terminal device, at least one of money balance information indicating a money balance within the money handling machine, transaction history information indicating a history of a money transaction and setting information necessary to operate the money handling machine, among various types of information stored in the money handling machine.

7. The money handling machine of claim 2, further comprising:
a storage portion that stores specific information for each terminal device.

8. The money handling machine of claim 7,
wherein the specific information includes terminal recognition information assigned to each terminal device such that the terminal device is recognized.

9. The money handling machine of claim 7,
wherein the specific information includes terminal user information that allows a user of the terminal device to be identified.

10. The money handling machine of claim 7,
wherein the specific information includes an IP address assigned to the terminal device.

11. The money handling machine of claim 7,
wherein the specific information includes a MAC address unique to the terminal device.

12. The money handling machine of claim 7,
wherein the specific information is divided into: general user information indicating a terminal device used by a general user that can use only a predetermined part of functions included in the money handling machine; and supervisor information indicating a terminal device used by a supervisor that can use all the functions included in the money handling machine.

13. The money handling machine of claim 7, further comprising:
a control portion that requires, when an instruction to dispense money is given to the money handling machine through the terminal device, a password to be input through an operation portion included in the money handling machine, that compares the password stored in the storage portion with the password input through the operation portion and that allows, when both the passwords agree with each other, the dispensed money to be removed from the money handling machine,
wherein the storage portion stores a password corresponding to the specific information.

14. The money handling machine of claim 12, further comprising:
a control portion;
wherein, when an instruction to dispense money is given to the money handling machine through the terminal device, and the money dispensed based on the instruction to dispense money has not been removed from the money handling machine for a predetermined period of time and thus a dispensing outlet is closed, the control portion performs control such that the dispensed money can be removed by an instruction through a terminal device in which stored specific information is the supervisor information.

15. The money handling machine of claim 12, further comprising:
a control portion that provides, when receiving an instruction requiring a supervisor approval through a terminal device in which stored specific information is the general user information, a notification to require the supervisor approval through a terminal device in which stored specific information is the supervisor information, and that performs, when the requirement is approved, processing corresponding to the instruction.

16. The money handling machine of claim 2, further comprising:
a control portion that compares first registration information received from the terminal device through the communication network with second registration information that has been input to the money handling machine within a predetermined period of time since the reception of the registration information, and that allows, when the first registration information agrees with the second registration information, the terminal device to utilize all functions included in the web server portion.

17. The money handling machine of claim 2, further comprising:
an operation portion through which a selection and a setting on various types of money transaction processing are performed;
a display portion that displays various processing conditions and various types of setting inforamation;
a web client portion that can utilize, by browsing data provided by the web server portion, various functions included in the web server portion; and
a control portion that controls display processing for displaying, on the display portion, the money transaction processing, processing related to an operation performed by the operation portion and a result obtained by browsing of the web client portion.

18. The money handling machine of claim 17,
wherein the operation portion and the display portion are each formed with a touch-panel display.

19. A money handling machine system that includes a money handling machine for handling money and a terminal device communicating with the money handling machine through a communication network,
wherein the money handling machine is the money handling machine of any one of claims 1 to 18.

20. A method of controlling a money handling machine for handling money, the method comprising:
a first step of generating instruction data for providing an instruction to control the money handling machine, through a terminal device connected to the communication network; and
a second step of receiving a browsing requirement from a web browser included in the terminal device and transmitting the instruction data to the web browser, which made the requirement,
wherein the instruction data is in a form that can be browsed by the web browser.

21. The control method of claim 20,
wherein the instruction data can provide an instruction to perform a money transaction processing function included in the money transaction processing machine, and the money transaction processing function includes at least one of a depositing processing function of depositing money, a dispensing processing function of dispensing money, a replenishing processing function of replenishing the money to be dispensed by the dispensing processing function and a collection processing function of collecting money within the money handling machine.

22. The control method of claim 20, further comprising:
a third step of receiving the browsing requirement from the web browser included in the terminal device and obtaining and transmitting, to the terminal device for the web browser that made the request source, at least one of money balance information indicating a money balance within the money handling machine, transaction history information indicating a history of a money transaction and setting information necessary to operate the money handling machine.

23. The control method of claim 20, further comprising:
a fourth step of comparing first registration information received from the terminal device through the communication network with second registration information that has been input to the money handling machine within a predetermined period of time since the reception of the registration information, and of allowing, when the first registration information agrees with the second registration information, the terminal device to utilize all functions included in the web server portion.
